# EUROPEAN PATENT SPECIFICATION

(11) **EP 3 475 065 B1**
(45) Date of publication and mention of the grant of the patent: **03.06.2020**
(21) Application number: 17737900.5
(22) Date of filing: 22.06.2017
(51) Int. Cl.: B29C 64/153, B29C 64/20, B33Y 30/00

(54) **APPARATUS FOR PRODUCING AN OBJECT BY MEANS OF ADDITIVE MANUFACTURING**
VORRICHTUNG ZUR HERSTELLUNG EINES OBJEKTS MITTELS GENERATIVER FERTIGUNG
APPAREIL DE PRODUCTION D'UN OBJET AU MOYEN D'UNE FABRICATION ADDITIVE

(30) Priority: 22.06.2016 NL 2017022
(43) Date of publication of application: 01.05.2019
(73) Proprietor: Additive Industries B.V., 5600 GA Eindhoven (NL)
(72) Inventor: VAN HAENDEL, Rob Peter Albert, 5600 GA Eindhoven (NL); VAES, Mark Herman Else, 5600 GA Eindhoven (NL); PIETERS, Raphaël René Gustaaf Mathieu, 5600 GA Eindhoven (NL)
(74) Representative: Algemeen Octrooi- en Merkenbureau B.V.
(86) International application number: PCT/NL2017/050418
(87) International publication number: WO 2017/222379

(56) References cited:
- DE-U1- 29 907 262

## Description

The present invention relates to an apparatus for producing an object by means of additive manufacturing, comprising a frame unit and a process unit connected to said frame unit, wherein said process unit comprises a process chamber for receiving a bath of powdered material which can be solidified; and a support for positioning the object in relation to a surface level of the bath of material.

3D printing or additive manufacturing refers to any of various processes for printing a three-dimensional object. Traditional techniques like injection molding can be less expensive for manufacturing, for example, polymer products in high quantities, but 3D printing or additive manufacturing can be faster, more flexible and less expensive when producing relatively small quantities of three-dimensional objects.

It is anticipated that additive manufacturing becomes more and more important in the future, as the increasing competitive pressure forces companies to not only manufacture more economically with a constant high product quality but also to save time and costs in the area of product development. The life span of products is continuously shortened. In addition to product quality and product costs, the moment of market introduction is becoming increasingly important for the success of a product.

The three-dimensional object may be produced by using a directed energy beam to selectively sinter a powder, or liquid material to produce a three-dimensional, 3D, object. In particular, a computer controlled additive manufacturing apparatus may be used which sequentially sinters a plurality of layers to build the desired object in a layer-by-layer fashion. Primarily additive processes are used, in which successive layers of material are laid down under computer control. These objects can be of almost any shape or geometry, and are produced from a 3D model or other electronic data source.

In order to print a three-dimensional object, a printable model is to be created with a computer design package or via a 3D scanner, for example. Usually, the input is a 3D CAD file such as an STL file, a STEP file or an IGS file. Before printing the object from a CAD file, the file is to be processed by a piece of software called a slicer, which converts the model into a series of thin subsequent layers. Further, apparatus settings and vectors are generated for controlling the creation of each of the subsequent layers.

A laser comprised in the computer controlled additive manufacturing apparatus follows these settings and vectors to lay down successive layers of liquid, powder, paper or sheet material to build the 3D object from a series of cross sections. These layers, which correspond to the virtual cross sections from the CAD model, are then joined or fused to create the final 3D object.

To reduce operational costs of the apparatus, it is an object to fully utilize the capacity of the apparatus and, at the same time, make sure that the total production lead time of a three dimensional object is minimized, i.e. the production queue is minimized. More in general, it is an object to improve the and the accuracy of the objects produced with an apparatus of the aforementioned kind.

DE 299 07 262 U1 discloses the features of the preamble of claim 1.

To this end, the invention provides an apparatus for producing an object by means of additive manufacturing, comprising a process chamber for receiving a bath of powdered material which can be solidified; a support for positioning the object in relation to a surface level of the bath of material; and a solidifying device for solidifying a selective layer-part of the material on the surface level by means of electromagnetic radiation. According to the invention, the apparatus comprises a plurality of build plate elements connected to the support. It was an insight of the inventor that by using a plurality of independent build plate elements, generally provided side by side, adjacent to each other, it is possible to manufacture a plurality of objects at the same time. Each of the plurality of build plate elements may be used to manufacture one or more of the plurality of objects at the same time. Once the objects are manufactured, the build plate elements may be removed from the support, after which each of the manufactured objects may be removed from their respective build plate element. For this, each build plate element may be handled separately, increasing the speed of subsequent processing of the objects produced, and thus decreasing the overall costs of manufacturing of the objects.

According to the invention, the apparatus comprises alignment means for individually aligning the plurality of build plate elements relative to the support for aligning the plurality of build plate elements in such a way that top surfaces of the plurality of build plate elements substantially define a single plane. This increases the accuracy with which the plurality of objects may be produced, as all build plate elements are substantially aligned within the same plane, aiding in deposition of powdered material to be solidified and the subsequent solidifying of the powdered material. For this, it is advantageous when each of the build plate elements comprises its own alignment means, such that alignment may be carried out for each build plate element individually.

In an embodiment, the alignment means comprise, for each of the plurality of build plate elements, a plurality of adjustment members. With this it is possible to adjust each build plate element individually, by using its respective adjustment members.

In an embodiment, the alignment means comprise, for each of the plurality of build plate elements, a total of three adjustment members. Each of the three adjustment members may be arranged for adjusting a corresponding part of the build plate element in a direction mainly perpendicular to the surface defined by the build plate elements. Said direction will in the following be referred to as the z-direction. The surface defined by the build plate elements, which corresponds to the surface defined by the material to be solidified, will in the following be referred to as the xy-plane.

By using a total of three adjustment members, each being adjustable in the z-direction, it will be possible to accurately position the respective build plate element in the required xy-plane. In particular, it will be possible to control the rotation about the x-axis (Rx), the rotation about the y-axis (Ry), and the z-position. Hence, a desired z-position can be given for the build plate element, and this build plate element may be positioned level with respect to the xy-plane.

To counter for thermal influences, it is advantageous when the plurality of, or total of three adjustment members are provided at equal distances from the thermal center of the build plate element.

In a particular embodiment, the three adjustment members define points of a equilateral triangle. This enables a relatively easy and quick alignment of the respective build plate element.

In an embodiment, the alignment means comprise, for each of the plurality of build plate elements, a plurality of positioning holes provided in the support, wherein the adjustment member comprises a positioning element connected to a respective positioning hole and arranged for supporting at least a part of a respective build plate element. The alignment means may comprise, for each of the plurality of build plate elements, a plurality of positioning holes provided in the support and a plurality of connection holes provided in the respective build plate element, wherein the adjustment member comprises a positioning element connected to a respective positioning hole and arranged for supporting at least a part of a respective build plate element, and wherein the adjustment member comprises a locking element for connecting the build plate element, via a respective connection hole of the build plate element, to the support. In this embodiment, holes are provided in the support, arranged for receiving positioning elements. These positioning elements comprise, at an outer end thereof, supporting parts that are arranged for supporting the respective part of the build plate element. The positioning elements are arranged for aligning the respective part of the build plate element, for example in that the positioning holes and the positioning elements are provided with mutually engageable thread. By screwing or unscrewing the positioning element, the height of the supporting part may be adjusted to a desired setting. Once the desired alignment is obtained, the locking elements may be used for securing the respective build plate element to the support. This may be done directly in that the locking elements engage with the support, or indirectly in that the locking elements engage with the positioning elements.

In the latter case, the positioning element may be provided with a locking hole for at least partly receiving the locking element. This locking hole and the locking element may be provided with mutually engaging thread.

In an alternative embodiment, the positioning element may be provided with a generally smooth hole that is a through hole. This through hole is adjusted to the locking element used, such that the locking element is able to reach the support. In the support, a plurality of locking holes may be provided, that may engage with the locking elements. In this case, the alignment means comprise, for each of the plurality of build plate elements, a plurality of locking holes provided in the support.

In an embodiment, at least one of the plurality of build plate elements comprises at least one connection hole provided therein, and the alignment means comprise at least one locking element for connecting the respective build plate element to the support via said connection hole. A build plate element may be connected to the support by means of a single locking element. A plurality of locking elements may be used as well. The build plate elements may comprise at least one connection hole provided in the build plate element, and the adjustment member may comprise a locking element for connecting the build plate element, via a respective connection hole of the build plate element, to the support.

The locking element is arranged, in an embodiment, to engage in at least part of the positioning hole provided in the support. To this end, the connection hole, the locking element and the positioning hole are arranged in such a way that the locking element is able to engage in at least part of the positioning hole provided in the support.

In an embodiment, for each of the positioning holes, a corresponding locking element is provided that is arranged to engage in at least part of the respective positioning hole.

Embodiments of the invention will be described in the following in connection with the Figures. In the Figures:
Figure 1 is an overview of an apparatus according to the present invention for additive manufacturing an object;
Figure 2 is a schematic overview of an embodiment of the apparatus according to the invention; and
Figure 3 is a schematic overview of a further embodiment of the apparatus according to the invention.

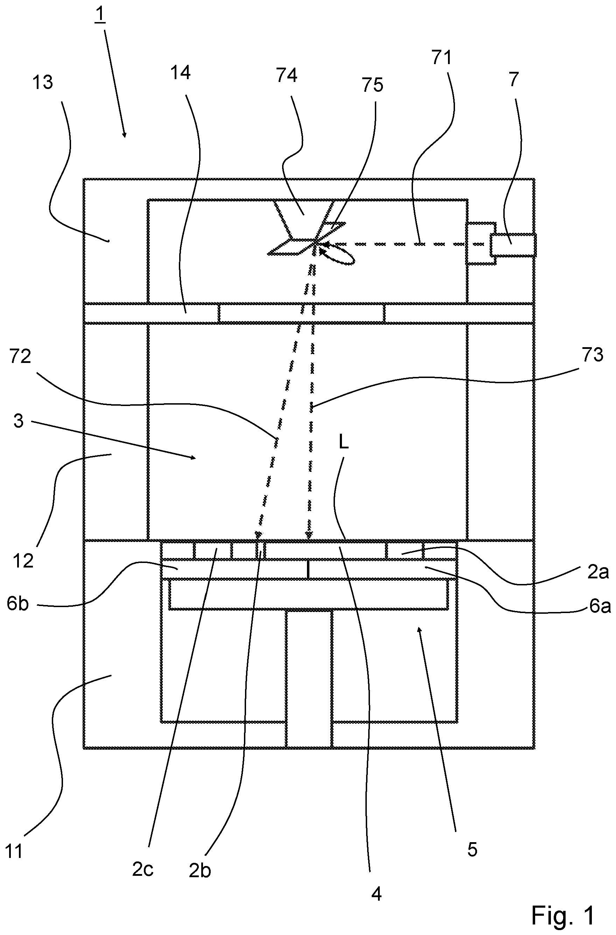

Figure 1 shows an overview of an apparatus 1 for producing an object 2 by means of additive manufacturing. The apparatus 1 is build from several frame parts 11, 12, 13. The apparatus comprises a process chamber 3 for receiving a bath of material 4 which can be solidified. In a lower frame part 11, a shaft 50 is formed, wherein a support 5 is provided for positioning the object 2 in relation to the surface level L of the bath of material 4. The support 5 is movably provided in the shaft 50, such that after solidifying a layer, the support 5 may be lowered, and a further layer of material may be solidified on top of the part of the object 2 already formed. In a top part 13 of the apparatus 1, a solidifying device 7 is provided for solidifying a selective part of the material. In the embodiment shown, the solidifying device 7 is a laser device, which is arranged for producing electromagnetic radiation in the form of laser light, in order to melt a powdered material provided on the support, which then, after cooling forms a solidified part of the object 2 to be produced. However, the invention is not limited to the type of solidifying device 7. As can be seen, the electromagnetic radiation 71 emitted by the laser device 7 is deflected by means of a deflector unit 74, which uses a rotatable optical element 75 to direct the emitted radiation 71 towards the surface L of the layer of material 4. Depending on the position of the deflector unit 74, radiation may be emitted, as an example, according to rays 72, 73.

According to the invention, the apparatus comprises a plurality of build plate elements 6a, 6b, connected to the support 5. In Fig. 1, a total of two build plate elements 6a, 6b can be seen. Each build plate element 6a, 6b may be used for manufacturing one or more objects. For example, in Fig. 1 build plate element 6a is used to manufacture a single object 2a. Build plate element 6b is used to manufacture two objects 2b, 2c. The build plate elements according to the invention are individually connected to the support, such that they may be individually removed for further processing, for example for removing the objects from the build plate. By using a plurality of build plate elements, each build plate element may be processed individually. This increases the ease and speed with which the objects may be removed.

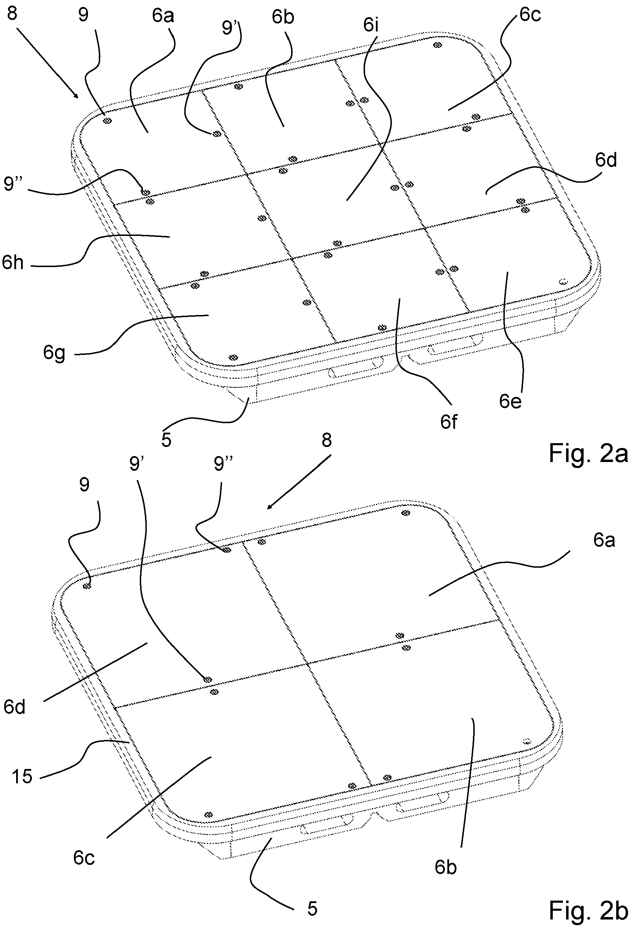

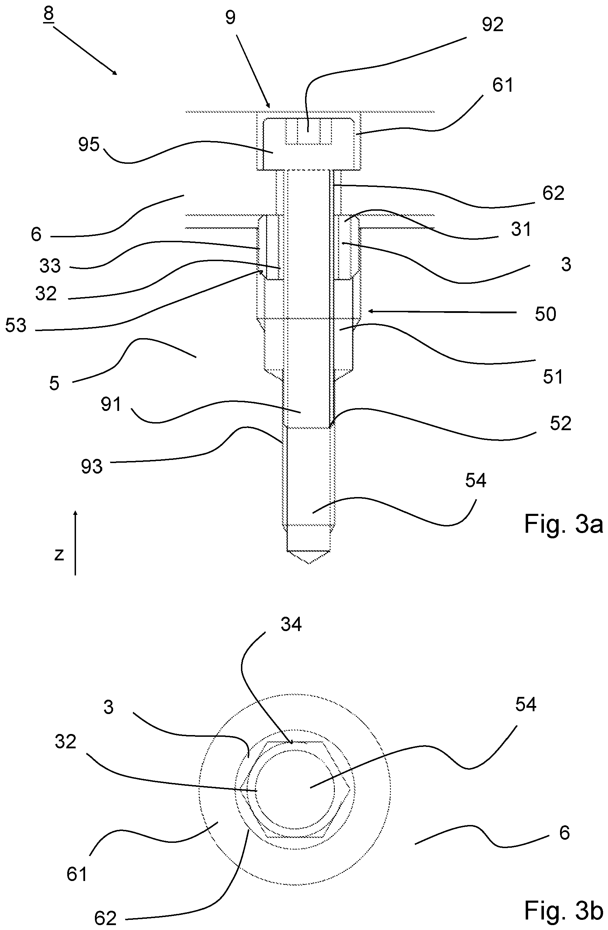

Fig. 2a shows an example of a support 5 having a total of nine build plate elements 6a-6i arranged next to each other. The nine build plate elements 6a-6i have the same dimensions in the embodiment shown, and are arranged in a square 3 by 3 grid. Each of the build plate elements 6a-6i is connected to the support 5 by means of alignment means 8 comprising, in the embodiment shown, a total of three adjustment members 9, 9', 9" for each build plate element 6a-6i. It is noted in this respect that for sake of clarity only reference signs are provided for the adjustment members 9, 9', 9" for build plate element 6a (top left in Fig. 2a). The alignment means 8 may be used to position the respective build plate element in a desired manner in space. In particular, these alignment means may be used for aligning the plurality of build plate elements in such a way that top surfaces of the plurality of build plate elements substantially define a single plane. To this end, the support 5 may be provided with a calibration member 15. In the embodiment shown, the calibration member 15 comprises an outer edge 15. The upper face of this outer edge 15 is accurately machined and defines a reference z-position and a reference xy-plane, with which the plurality of build plate elements 6a-6g may be accurately aligned. External means may be used during accurately aligning the plurality of build plate elements. For example, laser means may be used, or rigid linear beams that are placed onto the outer edge 15 of the support 5. Eventually, all build plate elements are aligned into a single plane, and may be locked into position by using locking means. This results in a smooth, planar top surface on which the object to be manufactured may be produced. These alignment means 8 and adjustment members 9, 9', 9" will be described in more detail with respect to Fig. 3a and 3b. First however, it is noted that in principle the locking of the individual build plate elements may take place in many forms, including forms known to those skilled in the art. It is thinkable that a single connecting means is used for each respective build plate. For instance, a single bolt with thread may be used to connect a build plate element to the support. In particular, a connection through hole may be provided in the thermal center of the build plate element, and a corresponding hole with mutually engaging thread may be provided in the support for receiving the connecting bolt. Alternatively, a plurality of connecting means may be used. In an embodiment, three connecting means are used for a single build plate element, wherein each of these connecting means is associated with a respective alignment means, as will be described below. It will be clear to those skilled in the art that connecting means other than a bolt and thread may be used as well.

Now, still referring to Fig. 2a, it can be seen that in this embodiment the adjustment members 9, 9', 9" are provided in a triangular fashion. The adjustment members 9, 9', 9" are provided at equal distances from each other, meaning that the distance between adjustment member 9 and 9' is equal to the distance between adjustment member 9 and 9", and is equal to the distance between the adjustment member 9' and 9". 6. Thus, the three adjustment members 9, 9', 9" define points of an equilateral triangle. Furthermore, the adjustment members are provided at equal distances of the thermal center of the build plate element, to be able to counteract thermal expansion of the support 5 and/or the build plate elements 6a-6i.

Fig. 2b shows an alternative embodiment, wherein a total of four build plate elements 6a-6d are used, connected to the support 5. These four build plate elements 6a-6d define a square two-by-two grid. Once again, alignment means 8 are provided, comprising three adjustment members 9, 9', 9" for each of the build plate elements 6a-6d. The edge 15 of the support 5 provides a calibration member to accurately align the individual build plate elements.

It is noted that in principle the same support 5 may be used in the embodiments of Fig. 2a and 2b. To be able to connect build plate elements having mutually different sizes, it is advantageous when the support 5 is provided with a number of locking holes that are arranged for cooperating with the adjustment members of the respective build plate element. Depending on the build plate elements that are expected to be used, the provision of these locking holes can be done in a relatively easy way. The details of the positioning holes will be described with respect to Fig. 3a and 3b.

Now turning to Fig. 3a and 3b, a side view and top view of an embodiment of the adjustment member 9 of the alignment means 8 can be seen.

Fig. 3a shows a sectional side view of the support 5, the build plate element 6 and the adjustment member 9. In general, the alignment means 8 comprise the support 5, a positioning element 3 connected thereto, a build plate element 6 supported by the positioning element 3, and a connection element 91 connecting the build plate element 6 to the support 5. The adjustment member 9 is formed by the locking element 91 and the positioning element 3. The positioning element 3 is arranged for positioning the build plate element 6, and in particular for setting a desired z-position of the build plate element 6. The locking element is arranged for locking the z-position of the build plate element 6, by connecting the build plate element 6 to the support 5.

Fig. 3a shows the support 5. In the support 5, a positioning hole 50 is provided. The positioning hole 50 is arranged to be able to take up a positioning element 3 that is arranged to be positioned in between the support 5 and the build plate element 6, and that is arranged for supporting the build plate element 6 with a flanged-like upper edge of the positioning element 3. The height of the positioning element 3, i.e. the positive and negative z-position, may be adjusted, to be able to align the build plate element 6 in a desired manner. To this end, the positioning element 3 comprises a cylindrical body provided with thread 33 that is able to mutually engage with thread 53 provided in the positioning hole 50 of the support. The positioning element 3 is furthermore provided with a through hole 32. The adjustment member 9 comprises a bolt like locking element 91. Said locking element 91 is provided with thread 93 on an outer end facing the support 5, and is arranged for mutually engaging thread 52 provided in a locking hole 54 of the support 5. The bolt like locking element 91 is arranged to be able to pass through the through hole 32 of the positioning element 3, and for this reason the through hole 32 is also referred to as locking hole 32. A flanged-like part 95 of the locking element 91 may be taken up by a recess 61 provided in the build plate element. By locking the locking element 91 into the support, all individual parts (support 5, positioning element 3, build plate element 6, and locking element 91) are connected to each other in a fixed way. Locking of the locking element 91 may be performed by using a recess 92, such as a hexagonal recess, provided in the head 95 of the connection element 9. For this, a hexagonal driver or Allen driver may be used. Other types of drivers are conceivable as well.

Fig. 3b shows a top view of the support 5, the positioning element 3 and the build plate element 6, without the connection element 9. Hence, this figure gives a better view of the recess 61 and the connection hole 62 of the build plate element 6, and a better view of the positioning element 3 having a through hole 32 reaching into the locking hole 54 of the support 5. From this Fig. 3b it is also clear that also the positioning element 3 is provided with a hexagonal recess 34, such that the z-position of the positioning element 3 may be easily adjusted by using a hexagonal driver or Allen driver.

It will be clear to those skilled in the art that in principle any recess and complementary driver may be used for the positioning element 3 and the connection element 91, such as flat, Phillips, hexagonal or the like.

In an alternative embodiment, which is not shown, the locking hole 32 of the positioning element 3 is provided with thread, and the locking element 91 is provided with thread that is arranged to engage the thread provided in the locking hole 32. Thus, the locking element 91 is connected, via the positioning element 3, to the support 5, for fixing the build plate element 6 to the support 5. Thus, connecting may take place either directly or indirectly.

It is noted that in general the adjustment members 9 of the alignment means 8 as described with reference to Fig. 3a and 3b may be used with a single build plate element as well, in order to accurately align a single build plate element. According to this aspect, an apparatus (1) for producing an object (2) by means of additive manufacturing is provided, comprising:
- a process chamber (3) for receiving a bath of powdered material (4) which can be solidified;
- a support (5) for positioning the object (2) in relation to a surface level (L) of the bath of material (2);
- a solidifying device for solidifying a selective layer-part of the material on the surface level by means of electromagnetic radiation;
- a build plate element connected to the support;
- alignment means for aligning the build plate element relative to the support.

It will be clear to those skilled in the art, that the invention is described above by means of several embodiments. However, the invention is not limited to these embodiments. The desired protection is defined by the appended claims.

## Claims

1. Apparatus (1) for producing an object (2) by means of additive manufacturing, comprising:
- a process chamber (3) for receiving a bath of powdered material (4) which can be solidified;
- a support (5) for positioning the object (2) in relation to a surface level (L) of the bath of material (4);
- a solidifying device (7) for solidifying a selective layer-part of the material on the surface level (L) by means of electromagnetic radiation;
- a plurality of build plate elements (6; 6a, 6b) connected to the support;
**characterized in that** the apparatus comprises alignment means (8) for individually aligning the plurality of build plate elements (6; 6a, 6b) relative to the support (5) in such a way that top surfaces of the plurality of build plate elements (6; 6a, 6b) substantially define a single plane.

2. Apparatus according to claim 1, wherein the alignment means (8) comprise, for each of the plurality of build plate elements (6; 6a, 6b), a plurality of adjustment members (9, 9', 9").

3. Apparatus according to claim 2, wherein the alignment means (8) comprise, for each of the plurality of build plate elements (6; 6a, 6b), a total of three adjustment members (9, 9', 9").

4. Apparatus according to claim 2 or 3, wherein the plurality of, or total of three adjustment members (9, 9', 9") are provided at equal distances from the thermal center of the build plate element.

5. Apparatus according to claims 3 or 4 depending on claim 3, wherein the three adjustment members (9, 9', 9") define points of a equilateral triangle.

6. Apparatus according to any one of the previous claims 2 to 5, wherein the alignment means (8) comprise, for each of the plurality of build plate elements (6; 6a, 6b), a plurality of positioning holes (50) provided in the support, wherein the adjustment member (9) comprises a positioning element (3) connected to a respective positioning hole (50) and arranged for supporting at least a part of a respective build plate element (6; 6a, 6b).

7. Apparatus according to any one of the previous claims 2 to 6, wherein at least one of the plurality of build plate elements (6; 6a, 6b) comprises at least one connection hole (62) provided therein, and wherein the alignment means (8) comprise a locking element (91) for connecting the respective build plate element to the support via said connection hole (62).

8. Apparatus according to claim 7, wherein the connection hole (62), the locking element (91) and the positioning hole (50) are arranged in such a way that the locking element (91) is able to engage in at least part of the positioning hole (50) provided in the support.

9. Apparatus according to claim 8, wherein for each of the positioning holes (50), a corresponding locking element (91) is provided that is arranged to engage in at least part of the respective positioning hole (50).

10. Apparatus according to claims 6 to 9, wherein the positioning holes (50) and the positioning elements (3) are provided with mutually engageable thread.

11. Apparatus according to claims 6 to 10, wherein the positioning element (3) is provided with a locking hole (32) for at least partly receiving the locking element (91).

12. Apparatus according to claim 11, wherein the locking hole (32) is a through hole, and wherein the alignment means (8) comprise, for each of the plurality of build plate elements (6), a plurality of locking holes (54) provided in the support (5).

## Patentansprüche

1. Vorrichtung (1) zur Herstellung eines Objekts (2) mittels generativer Fertigung, umfassend:
- eine Prozesskammer (3) zur Aufnahme eines Bades aus pulverisiertem Material (4), welches verfestigt werden kann;
- einen Träger (5) zum Positionieren des Objekts (2) in Bezug auf ein Oberflächenniveau (L) des Bades aus Material (4);
- eine Verfestigungsvorrichtung (7) zum Verfestigen eines selektiven Schichtteils des Materials auf dem Oberflächenniveau (L) mittels elektromagnetischer Strahlung;
- eine Vielzahl von Bauplattenelementen (6; 6a, 6b), die mit dem Träger verbunden sind;
**dadurch gekennzeichnet, dass** die Vorrichtung Ausrichtmittel (8) umfasst, um die Vielzahl der Bauplattenelemente (6; 6a, 6b) relativ zu dem Träger (5) in einer solchen Weise auszurichten, dass Deckflächen der Vielzahl von Bauplattenelementen (6; 6a, 6b) im Wesentlichen eine einzige Ebene definieren.

2. Vorrichtung nach Anspruch 1, wobei die Ausrichtmittel (8) für jede von der Vielzahl der Bauplattenelemente (6; 6a, 6b) eine Vielzahl von Justierelementen (9, 9', 9") umfasst.

3. Vorrichtung nach Anspruch 2, wobei die Ausrichtmittel (8) für jede von der Vielzahl der Bauplattenelemente (6; 6a, 6b) insgesamt drei Justierelemente (9, 9', 9") umfasst.

4. Vorrichtung nach Anspruch 2 oder 3, wobei die Vielzahl von oder insgesamt drei Justierelemente (9, 9', 9") in gleichen Abständen von der thermischen Mitte des Bauplattenelements bereitgestellt werden.

5. Vorrichtung nach Anspruch 3 oder 4 in Abhängigkeit von Anspruch 3, wobei die drei Justierelemente (9, 9', 9") Punkte eines gleichseitigen Dreiecks definieren.

6. Vorrichtung nach einem der vorhergehenden Ansprüche 2 bis 5, wobei das Ausrichtmittel (8) für jedes von der Vielzahl der Bauplattenelemente (6; 6a, 6b) eine Vielzahl von Positionierlöchern (50) umfasst, die in dem Träger bereitgestellt werden, wobei das Justierelement (9) ein Positionierelement (3) umfasst, das mit einem jeweiligen Positionierloch (50) verbunden ist und angeordnet ist, um mindestens ein Teil eines jeweiligen Bauplattenelements (6; 6a, 6b) zu tragen.

7. Vorrichtung nach einem der vorhergehenden Ansprüche 2 bis 6, wobei mindestens eines von der Vielzahl von Bauplattenelementen (6; 6a, 6b) mindestens ein darin bereitgestelltes Verbindungsloch (62) umfasst, und wobei das Ausrichtmittel (8) ein Arretierelement (91) zum Verbinden des jeweiligen Bauplattenelements mit dem Träger mittels des Verbindungsloches (62) umfasst.

8. Vorrichtung nach Anspruch 7, wobei das Verbindungsloch (62), das Arretierelement (91) und das Positionierloch (50) in einer solchen Weise angeordnet sind, dass das Arretierelement (91) in der Lage ist, mit mindestens einem Teil des in dem Träger bereitgestellten Positionierloches (50) in Eingriff zu kommen.

9. Vorrichtung nach Anspruch 8, wobei für jedes der Positionierlöcher (50) ein entsprechendes Arretierelement (91) bereitgestellt wird, das angeordnet ist, um mit mindestens einem Teil des jeweiligen Positionierloches (50) in Eingriff zu kommen.

10. Vorrichtung nach den Ansprüchen 6 bis 9, wobei die Positionierlöcher (50) und die Positionierelemente (3) mit miteinander in Eingriff bringbarem Gewinde ausgestattet sind.

11. Vorrichtung nach den Ansprüchen 6 bis 10, wobei das Positionierelement (3) mit einem Arretierloch (32) ausgestattet ist, um mindestens teilweise das Arretierelement (91) aufzunehmen.

12. Vorrichtung nach Anspruch 11, wobei das Arretierloch (32) ein durchgehendes Loch ist, und wobei das Ausrichtmittel (8) für jedes von der Vielzahl der Bauplattenelemente (6) eine Vielzahl von in dem Träger (5) bereitgestellten Arretierlöchern (54) umfasst.

## Revendications

1. Appareil (1) pour fabriquer un objet (2) au moyen de la fabrication additive, comprenant :
- une chambre de traitement (3) pour recevoir un bain de matériau en poudre (4) qui peut être solidifié ;
- un support (5) pour positionner l'objet (2) par rapport à un niveau de surface (L) du bain de matériau (4) ;
- un dispositif de solidification (7) pour solidifier une partie de couche sélective du matériau sur le niveau de surface (L) au moyen d'un rayonnement électromagnétique ;
- une pluralité d'éléments formant plaques de construction (6 ; 6a, 6b) reliés au support ;
**caractérisé en ce que** l'appareil comprend des moyens d'alignement (8) pour aligner individuellement la pluralité d'éléments formant plaques de construction (6 ; 6a, 6b) par rapport au support (5) de sorte que les surfaces supérieures de la pluralité d'éléments formant plaques de construction (6 ; 6a, 6b) définissent essentiellement un seul plan.

2. Appareil selon la revendication 1, dans lequel les moyens d'alignement (8) comprennent, pour chacun de la pluralité d'éléments formant plaques de construction (6 ; 6a, 6b), une pluralité d'organes de réglage (9, 9', 9").

3. Appareil selon la revendication 2, dans lequel les moyens d'alignement (8) comprennent, pour chacun de la pluralité d'éléments formant plaques de construction (6 ; 6a, 6b), un total de trois organes de réglage (9, 9', 9").

4. Appareil selon la revendication 2 ou 3, dans lequel la pluralité ou le total de trois organes de réglage (9, 9', 9") sont prévus à des distances égales par rapport au centre thermique de l'élément formant plaque de construction.

5. Appareil selon la revendication 3 ou 4 quand elle dépend de la revendication 3, dans lequel les trois organes de réglage (9, 9', 9") définissent les sommets d'un triangle équilatéral.

6. Appareil selon l'une quelconque des revendications précédentes 2 à 5, dans lequel les moyens d'alignement (8) comprennent, pour chacun de la pluralité d'éléments formant plaques de construction (6 ; 6a, 6b), une pluralité de trous de positionnement (50) prévus dans le support, où l'organe de réglage (9) comprend un élément de positionnement (3) relié à un trou de positionnement respectif (50) et agencé pour supporter au moins une partie d'un élément formant plaque de construction respectif (6 ; 6a, 6b).

7. Appareil selon l'une quelconque des revendications précédentes 2 à 6, dans lequel au moins l'un de la pluralité d'éléments formant plaques de construction (6 ; 6a, 6b) comprend au moins un trou de liaison (62) prévu dans celui-ci, et dans lequel les moyens d'alignement (8) comprennent un élément de verrouillage (91) pour relier l'élément formant plaque de construction respectif au support via ledit trou de liaison (62).

8. Appareil selon la revendication 7, dans lequel le trou de liaison (62), l'élément de verrouillage (91) et le trou de positionnement (50) sont agencés de sorte que l'élément de verrouillage (91) soit capable de s'engager dans au moins une partie du trou de positionnement (50) prévu dans le support.

9. Appareil selon la revendication 8, dans lequel pour chacun des trous de positionnement (50), un élément de verrouillage correspondant (91) qui est agencé pour s'engager dans au moins une partie du trou de positionnement respectif (50) est prévu.

10. Appareil selon les revendications 6 à 9, dans lequel les trous de positionnement (50) et les éléments de positionnement (3) sont pourvus de filetages pouvant s'engager mutuellement.

11. Appareil selon les revendications 6 à 10, dans lequel l'élément de positionnement (3) est pourvu d'un trou de verrouillage (32) pour recevoir au moins partiellement l'élément de verrouillage (91).

12. Appareil selon la revendication 11, dans lequel le trou de verrouillage (32) est un trou traversant, et dans lequel les moyens d'alignement (8) comprennent, pour chacun de la pluralité d'éléments formant plaques de construction (6), une pluralité de trous de verrouillage (54) prévus dans le support (5).
